# FASCICULE DE BREVET EUROPEEN

(11) **EP 4 292 034 B1**
(45) Date de publication et mention de la délivrance du brevet: **22.07.2026**
(21) Numéro de dépôt: 22708839.0
(22) Date de dépôt: 11.02.2022
(51) Int. Cl.: G06Q 10/083, G06Q 10/08, B65G 1/137

(54) **SYSTÈME DE PRISE DE VUES D'UN CONTENANT OUVERT SE DÉPLAÇANT SUR UN CONVOYEUR**
SYSTEM ZUR ERFASSUNG VON BILDERN EINES AUF EINEM FÖRDERER BEWEGTEN OFFENEN BEHÄLTERS
SYSTEM FOR CAPTURING IMAGES OF AN OPEN CONTAINER MOVING ON A CONVEYOR

(30) Priorité: 12.02.2021 FR 2101355
(43) Date de publication de la demande: 20.12.2023
(73) Titulaire: Versa S.A.S., 29290 Saint-Renan (FR)
(72) Inventeur: MOULINEC, Jacques, 29200 Brest (FR)
(74) Mandataire: Derriennic, Tangui Jean
(86) Numéro de dépôt international: PCT/EP2022/053318
(87) Numéro de publication internationale: WO 2022/171775

(56) Documents cités:
- EP-A1- 3 147 838
- EP-A2- 2 286 932

## Description

### Domaine technique de l'invention

La présente invention concerne un système de prise de vues d'un contenant ouvert se déplaçant sur un convoyeur.

Elle s'applique, en particulier, à toutes les entreprises, organismes publics ou privés utilisant le transport de marchandises dans des unités de manutention ou de conditionnement ou tout autre contenant manipulable.

### Technique antérieure

Un des buts de l'invention est de tracer automatiquement les mouvements de marchandises pendant la phase de fermeture du contenant.

Pour le suivi du transport de marchandises, une technique antérieure consiste à utiliser un lecteur de code barre du contenant sans preuve du contenu.

Il est connu les documents EP3147838 et EP2286932 qui crée un contenant en fonction des dimensions des contenus.

Aucune des solutions actuelles ne permet de répondre à tous les besoins requis, à savoir de fournir un suivi avéré des contenus dans un contenant, sans pour autant nécessiter une connaissance préalable du contenu et du contenant.

### Présentation de l'invention

La présente invention vise à remédier à ces inconvénients avec une approche totalement novatrice.

Plus précisément, l'invention a pour objectif de fournir une ou plusieurs preuves d'étapes de fermeture d'un contenant.

Un autre objectif de l'invention est de fournir une telle technique qui soit peu coûteuse à mettre en œuvre sur un système déjà en place de transport de marchandises tel qu'un convoyeur.

Les besoins sont les suivants :
- il n'y a pas de preuve probante prise de manière automatique sans erreur humaine que le contenu soit bien présent juste avant la fermeture ;
- il n'y a pas de preuve probante prise de manière automatique sans erreur humaine que le contenu soit toujours dans un contenant après la fermeture lors de son transit (il est envisageable et possible d'ouvrir et de refermer un contenant après sa fermeture) ;
- posséder la preuve qualité irréfutable de la préparation de commande ;
- diminuer les litiges ;
- stocker des preuves ;
- étiqueter automatiquement les colis avec un code unique ;
- partager et transmettre les preuves photos et vidéos à haute résolution ;
- savoir ce qui est dans un contenant fermé ou sous scellée sans avoir à ouvrir les contenants, ou l'altérer de quelques manière que ce soit

Ces objectifs, ainsi que d'autres qui apparaîtront par la suite, sont atteints, à l'aide d'un système de prise de vues d'un contenant ouvert se déplaçant sur un convoyeur, comportant :
- un convoyeur ;
- un contenant ouvert comportant au moins un contenu ;
- un dispositif de prise de vues situé au-dessus du contenant ouvert ;

remarquable en ce que ledit système comporte en outre :
   - un lecteur de code barre configuré pour lire un code barre situé sur une face extérieure dudit contenant ;
   - un module d'identification unique du contenu configuré pour identifier chaque contenu ;
   - un module de traitement des données comportant une base de données, ledit module de traitement des données est configuré pour :
   - stocker les prise de vues avec l'identification du code barre du contenant et l'identification unique de chaque contenu ;
   - associer une information temporelle avec des données de prise de vues issues de chaque prise de vues du dispositif de prise de vues ;
ledit module de traitement est configuré pour déclencher une prise de vues lorsque le contenant ouvert est proximal du dispositif de prise de vues pendant le déplacement du convoyeur.

L'invention est avantageusement mise en œuvre selon les modes de réalisation et les variantes exposées ci-après, lesquelles sont à considérer individuellement ou selon toute combinaison techniquement opérante.

Ainsi, le système est flexible et s'adapte à n'importe quel système de contenant déjà existant. Dans ce cas, le contenant peut être créé ou réutilisé.

Dans un mode de réalisation, ledit système comporte un module d'identification unique du contenant compris selon au moins l'un des éléments suivants :
- une étiquette d'identification par fréquences radio, de type RFID, intégrée au contenant ;
- une carte d'identité unique intégrée au contenant ;
une référence unique à une base de données formée d'une chaine de blocs ordonnés, dite blockchain, intégrée dans le contenant et lisible ou détectable de l'extérieur par un système d'onde.

Dans un mode de réalisation, le module de traitement associe une reconnaissance du contenant par identification d'étiquettes ou RFID ou blockchain ou toute autre marque d'identification unique de chaque contenant.

Dans un mode de réalisation, le module d'identification unique du contenu comporte un module configuré pour identifier la forme ou le niveau dans le contenant. Il s'agit d'un contenu indénombrable.

Dans un mode de réalisation, le module d'identification unique du contenu comporte au moins l'un des éléments suivants :
- étiquette d'identification par fréquences radio, de type RFID, intégrée au contenu ;
- un code barre ou code barre bidimensionnel ;
- une carte d'identité unique intégrée au contenu ;
- une référence unique à une base de données formée d'une chaine de blocs ordonnés, dite blockchain, intégrée dans le contenu et lisible ou détectable de l'extérieur par un système d'onde.

Dans un mode de réalisation, le module de traitement associe une reconnaissance du contenu des contenants ouverts par identification du module d'identification :
étiquettes ou RFID ou blockchain ou toute autre marque d'identification unique de chaque contenu.

Le système comporte en outre un module d'identification unique in violable de traçabilité unique et certaine du contenant un à 3 systèmes différents parmi : une étiquette d'identification par fréquences radio, de type RFID, intégrée au contenant, carte d'identité unique intégrée au contenant, une référence unique à une base de données formée d'une chaine de blocs ordonnés, dite blockchain, intégrée dans le contenant et lisible ou détectable de l'extérieur par un système d'onde quelle qu'elle soit.

Le système selon l'invention interagit avec un réseau, dit réseau privé, qui héberge de manière distribuée une base de données formée d'une chaine de blocs ordonnés, et associée à un protocole d'écriture/lecture et de validation cryptographique de transactions effectuées sur le réseau privé. Une telle base de données est plus connue sous sa dénomination anglaise de blockchain, qui est utilisée dans toute la suite.

La vitesse du convoyeur est au-delà de 0,05 m/s. En général, la vitesse est de l'ordre de 0.25 m/s

Grâce à ces dispositions, le système permet d'avoir une preuve qualité irréfutable de la préparation de commande et du contenu initial mis dans le contenant et sans qu'il ait pu être interverti.

Dans un mode de réalisation le dispositif d'affichage est configuré pour afficher en outre le ou les contenus d'un contenant.

Dans un mode de réalisation, la distance entre l'ouverture du contenant et le dispositif de prise de vues est comprise entre 20 et 1000 cm. De préférence, de l'ordre de 100cm.

Dans un mode de réalisation, le dispositif de prise de vues comporte un flash ou un émetteur d'ondes qui se déclenche lors d'une prise de vues.

Dans un mode de réalisation, il comporte un module de communication de données qui comporte un émetteur-récepteur de données rendant accessible les informations du module de traitement.

Le module de communication est une borne réseau mobile ou filaire d'échange de données avec au moins l'un des éléments suivants : serveur, ordinateur, smartphone (terme anglophone pour téléphone portable), tablette numérique, cloud (alternative de stockage développée en nuage, appelé cloud), et internet. L'échange de données permet aussi d'y avoir accès par une application mobile.

Dans un mode de réalisation, il comporte un dispositif de fermeture par la pose d'un premier étiquetage configuré pour être déchiré ou altéré lors de l'ouverture du contenant (usage unique).

Dans un mode de réalisation, le module de traitement des données associe une information temporelle avec le premier étiquetage.

Dans un mode de réalisation, le module de traitement des données est configuré pour associer une information temporelle avec le premier étiquetage et le deuxième étiquetage.

Dans un mode de réalisation, il comporte un dispositif de fermeture par un collage ferme, d'une robustesse supérieure à la robustesse la plus faible des matériaux et coutures constitutif du contenant ne permettant pas l'ouverture du contenant sans le déchirer, l'altérer de manière irrémédiable.

Le premier étiquetage est par exemple un cachet ou autre comme une cire ou assimilé, un fil non cassé et collé, une étiquette spéciale possédant des marques indélébiles lors de sa déchirure, ...

Dans un mode de réalisation, le premier étiquetage comporte une série de fils fermés tendus collés ou intégrés de quelque manière que ce soit au matériau du contenant et en faisant le tour, les différents films faisant entre eux à leur intersection des angles minimum de 30°, ou les intersections d'un même films faisant entre eux à leur intersection des angles minimum de 30°.

Dans un mode de réalisation, il comporte un dispositif de fermeture par la pose d'un premier étiquetage et un deuxième étiquetage, ledit deuxième étiquetage étant une étiquette liée à la première étiquette.

Dans un mode de réalisation, le module de traitement des données associe une information contextuelle du premier étiquetage et ou du deuxième étiquetage : lieux géographique (Site, ligne de production ou d'emballage ou de préparation de commande, ...).

Dans un mode de réalisation, le module de traitement des données associe une information d'un agent ayant réalisé le premier étiquetage et ou le deuxième étiquetage : machine avec son identifiant (Numéro de série, etc.), personne ayant réalisé l'opération avec son identifiant unique, lot d'un process multi-machines avec son numéro ou identifiant unique etc.

Dans un mode de réalisation, le système comporte un dispositif intégré de traçabilité des mesures physiques internes ou externes positionné dans au moins l'un des éléments suivants : le contenant ou le contenu.

Dans un mode de réalisation, le contenant possède un dispositif intégré de traçabilité des mesures physiques internes ou externes : énergie calorifique et les grandeurs permettant de la mesurer, énergie lumineuse et les grandeurs permettant de la mesurer , énergie électro-statique et les grandeurs permettant de la mesurer, énergie électrique et les grandeurs permettant de la mesurer, énergie potentielle de pesanteur et les grandeurs permettant de la mesurer, énergie cinétique et les grandeurs permettant de la mesurer, énergie de rayonnement et les grandeurs permettant de la mesurer, la constitution de l'élément liquide ou gazeux qui entoure les contenus dans le contenant (l'hydrométrie, gaz inerte...)...

Dans un mode de réalisation, un ou des contenus possède(nt) un dispositif intégré de traçabilité des mesures physiques (énergie calorifique et les grandeurs permettant de la mesurer, énergie lumineuse et les grandeurs permettant de la mesurer , énergie électro-statique et les grandeurs permettant de la mesurer, énergie électrique et les grandeurs permettant de la mesurer, énergie potentielle de pesanteur et les grandeurs permettant de la mesurer, énergie cinétique et les grandeurs permettant de la mesurer, énergie de rayonnement et les grandeurs permettant de la mesurer ...).

Dans un mode de réalisation, un dispositif intégré de traçabilité des mesures physiques (énergie calorifique et les grandeurs permettant de la mesurer, énergie lumineuse et les grandeurs permettant de la mesurer , énergie électro-statique et les grandeurs permettant de la mesurer, énergie électrique et les grandeurs permettant de la mesurer, énergie potentielle de pesanteur et les grandeurs permettant de la mesurer, énergie cinétique et les grandeurs permettant de la mesurer, énergie de rayonnement et les grandeurs permettant de la mesurer ...) est placé dans le contenant au même titre que le contenu.

Dans un mode de réalisation, ledit système a la capacité à tracer le contenu dans un contenant :
- les changements et évolutions des mesures physiques (énergie calorifique et les grandeurs permettant de la mesurer, énergie lumineuse et les grandeurs permettant de la mesurer , énergie électro-statique et les grandeurs permettant de la mesurer, énergie électrique et les grandeurs permettant de la mesurer, énergie potentielle de pesanteur et les grandeurs permettant de la mesurer, énergie cinétique et les grandeurs permettant de la mesurer, énergie de rayonnement et les grandeurs permettant de la mesurer ...) de l'environnement au sien du contenant lors de son stockage ou de ses mouvements ou de son transport
- l'évolution dans le temps de ces évolutions
- la corrélation de ces évolutions avec différents évènements externes agissant sur le contenant

Dans un mode de réalisation, le système comporte un dispositif intégré de géolocalisation positionné dans au moins l'un des éléments suivants : le contenant ou le contenu.

Autrement dit, selon un exemple de réalisation, le contenant possède un dispositif intégré de géolocalisation.

Selon un autre exemple de réalisation, un ou des contenus possède(nt) un dispositif intégré de géolocalisation.

Dans un mode de réalisation, un dispositif intégré de géolocalisation est placé dans le contenant au même titre que le contenu.

### Brève description des figures

D'autres avantages, buts et caractéristiques de la présente invention ressortent de la description qui suit faite, dans un but explicatif et nullement limitatif, en regard des dessins annexés, dans lesquels :

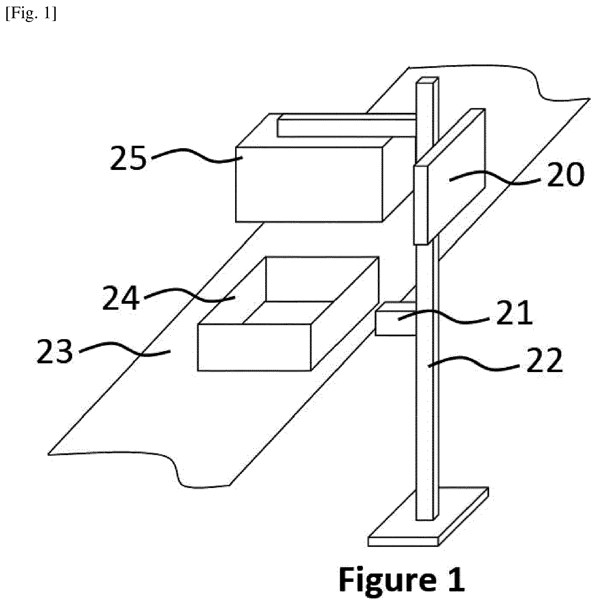

[Fig.1] la [Fig.1] représente un schéma du système de prise de vues d'un contenant ouvert se déplaçant sur un convoyeur objet de la présente invention.

### Description des modes de réalisation

La [Fig.1] montre un schéma du système de prise de vues d'un contenant 24 ouvert se déplaçant sur un convoyeur 23.

Le principe est d'effectuer, automatiquement, des prises de vues des contenants 24 ou cartons ouverts passant sur un convoyeur 23.

Le système permet de réaliser un horodatage à la fermeture.

Cette figure montre un dispositif de prise de vues 25.

Un lecteur de code barre 21 permet d'identifier chaque carton. La photo du carton ouvert est alors associée au code SSCC carton lu (pour Serial Shipping Container Code ou numéro séquentiel de colis).

La notion de proximal du dispositif de prise de vues s'explique par le déclenchement de la prise de vues : le déclenchement se fait soit par le lecteur code barre 21 soit par l'analyse du dispositif de prise de vues 25.

La fin de la prise de vues se fait selon les mêmes principes ou par un bouton opérateur.

Selon autre exemple, il y a plusieurs systèmes de lecteur code barre.

La lecture du code barre est déclenché par une cellule ce qui suppose que les cartons sont séparés mécaniquement sur le convoyeur 23 (pas de cartons collés).

Le système est totalement intégré et est composé des éléments suivants :
- Un coffret vitré à l'intérieur duquel est positionnée une caméra + éclairage intégré ;
- un PC pour le pilotage, autrement dit une unité de traitement ;
- une partie commande électrique (Alimentation 24V, switch (commutateur), automate) ;
- un lecteur de code barre 21 ;
- un écran 20 de visualisation tactile ;
- une vérine d'état permettant d'alerter l'opérateur en cas de défaut ;
- un ensemble mécanique supportant l'ensemble (Support 22 type potence avec piètement en profilé aluminium).

Le module de traitement comporte un logiciel de pilotage qui affiche la dernière photo réalisée, en cas de codes-barres non lus ou d'application non démarrée, un signal tout ou rien permet l'arrêt du convoyage.

Une vérine avec un buzzer (avertisseur sonore) alerte l'opérateur en cas de défaut.

Selon une variante, le dispositif de prise de vue est une caméra industrielle couleur. Cette caméra est couplée avec un éclairage intégré.

Le module de traitement comporte les aspects suivants :
- lire les données et images cryptées remontées par le dispositif de prise de vue 25 via un moteur de recherche permettant des recherches via mot clé de type : numéro de colis, client, ...
- stocker des informations pendant une période prédéfinie à la commande du service ;
- sécuriser des données ;
- donner l'accès à plusieurs utilisateurs autorisés pour effectuer les opérations de recherches de photos preuves (via le numéro SSCC colis ou une clé définie conjointement lors de la phase d'intégration) ;
- envoyer à des emails ou url des liens vers les photos preuves ;
- donner accès à des utilisateurs de sociétés clientes ou de sociétés partenaires, dans la limite du nombre d'utilisateurs de la présente proposition.

Une application mobile reliée en temps réel au système permet d'avoir accès aux prises de vues.

Le système comporte un dispositif de fermeture par la pose d'un premier étiquetage.

Le premier étiquetage correspond à un cachet de fermeture qui est associé à un horodatage. Le premier étiquetage est par exemple un cachet ou autre comme une cire ou assimilé, un fil non cassé et collé, une étiquette...

Le système déclenche une prise de vue après la fermeture du contenant 24 par le dispositif de fermeture. La prise de vue est réalisée après cette opération de fermeture et une information temporelle est associée à la donnée de prise de vues.

Selon une variante, le système comporte un dispositif de fermeture par la pose d'un deuxième étiquetage. Le deuxième étiquetage est une étiquette liée à la première étiquette. La liaison est une liaison virtuelle, c'est-à-dire que la donnée horodatée de la prise de vue du premier étiquetage est liée à la donnée horodatée de la prise de vue du deuxième étiquetage.

La lecture jointe des deux étiquetages donne la certitude de la non violation du contenu.

Voici les étapes de fonctionnement du système :
- un carton étiqueté arrive ;
- l'opérateur a une liste de marchandises à mettre dedans et les mets dedans ;
- réalisation d'une prise de vues avec un horodatage (information temporelle),
- reconnaissance du carton (étiquette) permet d'avoir la liste de colis ;
- filmage de l'opération de mise sous colis ;
- fermeture du contenant ;
- soit cachet ou étiquette 1 ;
- soit collage de l'étiquette 2 liée informatiquement à l'étiquette 1

### Liste des signes de référence

**[Tableaux1]**

| Références | Désignations |
|---|---|
| 20 | écran |
| 21 | lecteur de code barre |
| 22 | support |
| 23 | convoyeur |
| 24 | contenant |
| 25 | dispositif de prise de vues |

## Revendications

1. Système de prise de vues d'un contenant ouvert se déplaçant sur un convoyeur, comportant :
- un convoyeur (23) ;
- un contenant (24) ouvert comportant au moins un contenu ;
- un dispositif de prise de vues (25) situé au-dessus du contenant (24) ouvert ;
**caractérisé en ce que** ledit système comporte en outre :
- un lecteur de code barre (21) configuré pour lire un code barre situé sur une face extérieure dudit contenant (24) ;
- un dispositif d'affichage configuré pour afficher au moins une prise de vues dudit dispositif de prise de vues (25) et le code barre du contenant (24),
- un module d'identification unique du contenu configuré pour identifier chaque contenu ;
- un module de traitement des données comportant une base de données, ledit module de traitement des données est configuré pour :
- stocker les prise de vues avec l'identification du code barre du contenant (24) et l'identification unique de chaque contenu ;
- associer une information temporelle avec des données de prise de vues issues de chaque prise de vues du dispositif de prise de vues ;
ledit module de traitement est configuré pour déclencher une prise de vues lorsque le contenant (24) ouvert est proximal du dispositif de prise de vues (25) pendant le déplacement du convoyeur (23) et il comporte un dispositif de fermeture par la pose d'un premier étiquetage configuré pour être déchiré ou altéré lors de l'ouverture du contenant.

2. Système selon la revendication 1, dans lequel ledit système comporte un module d'identification unique du contenant compris selon au moins l'un des éléments suivants :
- une étiquette d'identification par fréquences radio, de type RFID, intégrée au contenant ;
- une carte d'identité unique intégrée au contenant ;
- une référence unique à une base de données formée d'une chaine de blocs ordonnés, dite blockchain, intégrée dans le contenant et lisible ou détectable de l'extérieur par un système d'onde.

3. Système selon la revendication 1, dans lequel le module d'identification unique du contenu comporte un module configuré pour identifier la forme ou le niveau dans le contenant.

4. Système selon la revendication 1, dans lequel le module d'identification unique du contenu comporte au moins l'un des éléments suivants :
- étiquette d'identification par fréquences radio, de type RFID, intégrée au contenu ;
- un code barre ou code barre bidimensionnel ;
- une carte d'identité unique intégrée au contenu ;
- une référence unique à une base de données formée d'une chaine de blocs ordonnés, dite blockchain, intégrée dans le contenu et lisible ou détectable de l'extérieur par un système d'onde.

5. Système selon la revendication 1, dans lequel le dispositif d'affichage est configuré pour afficher en outre le ou les contenus d'un contenant.

6. Système selon la revendication 1, dans lequel la distance entre l'ouverture du contenant (24) et le dispositif de prise de vues (25) est comprise entre 20 et 1000 cm.

7. Système selon la revendication 1, dans lequel le dispositif de prise de vues (25) comporte un flash ou un émetteur d'ondes qui se déclenche lors d'une prise de vues.

8. Système selon la revendication 1, dans lequel il comporte un module de communication de données qui comporte un émetteur-récepteur de données rendant accessible les informations du module de traitement.

9. Système selon la revendication 7, dans lequel le module de traitement des données est configuré pour associer une information temporelle avec le premier étiquetage.

10. Système selon la revendication 8, dans lequel le module de traitement des données est configuré pour associer une information temporelle avec le premier étiquetage et un deuxième étiquetage.

11. Système selon la revendication 1, dans lequel il comporte un dispositif de fermeture par la pose d'un premier étiquetage et un deuxième étiquetage, ledit deuxième étiquetage étant une étiquette liée à la première étiquette.

12. Système selon la revendication 1, dans lequel le système comporte un dispositif intégré de traçabilité des mesures physiques internes ou externes positionné dans au moins l'un des éléments suivants : le contenant ou le contenu.

13. Système selon la revendication 1, dans lequel le système comporte un dispositif intégré de géolocalisation positionné dans au moins l'un des éléments suivants : le contenant ou le contenu.

## Patentansprüche

1. System zur Aufnahme eines offenen Behälters, der sich auf einem Förderband bewegt, umfassend:
- ein Förderband (23);
- einen offenen Behälter (24), der mindestens einen Inhalt umfasst;
- eine Aufnahmevorrichtung (25) oberhalb des geöffneten Behälters (24);
**dadurch gekennzeichnet, dass** das System ferner umfasst:
- einen Barcodeleser (21), der so konfiguriert ist, dass er einen Barcode liest, der sich auf einer Außenseite des Behälters (24) befindet;
- eine Anzeigevorrichtung, die so konfiguriert ist, dass sie mindestens eine Aufnahme der Aufnahmevorrichtung (25) und den Barcode des Behälters (24) anzeigt,
- ein Modul zur eindeutigen Identifizierung des Inhalts, das so konfiguriert ist, dass es jeden Inhalt identifiziert;
- ein Datenverarbeitungsmodul, das eine Datenbank umfasst, wobei das Datenverarbeitungsmodul für Folgendes konfiguriert ist:
- Speichern der Aufnahmen mit der Identifikation des Barcodes des Behälters (24) und der eindeutigen Identifikation jedes Inhalts;
- Verknüpfen einer zeitlichen Information mit den Aufnahmedaten, die aus jeder Aufnahme der Aufnahmevorrichtung stammen;
wobei das Verarbeitungsmodul so konfiguriert ist, dass es eine Aufnahme auslöst, wenn der geöffnete Behälter (24) sich während der Bewegung des Förderbands (23) proximal zur Aufnahmevorrichtung (25) befindet, und es eine Verschlussvorrichtung durch Anbringen einer ersten Kennzeichnung umfasst, die so konfiguriert ist, dass sie beim Öffnen des Behälters zerrissen oder verändert wird.

2. System nach Anspruch 1, wobei das System ein eindeutiges Identifikationsmodul des Behälters umfasst, das mindestens eines der folgenden Elemente umfasst:
- ein in den Behälter integriertes RFID-Etikett zur Identifizierung über Funkfrequenzen;
- einen eindeutigen Identitätsnachweis, der in den Behälter integriert ist;
- eine eindeutige Referenz auf eine Datenbank, die aus einer Kette geordneter Blöcke, der sogenannten Blockchain, besteht, die in den Behälter integriert ist und von außen durch ein Wellensystem lesbar oder erkennbar ist.

3. System nach Anspruch 1, wobei das Modul zur eindeutigen Identifizierung des Inhalts ein Modul umfasst, das so konfiguriert ist, dass es die Form oder den Füllstand im Behälter identifiziert.

4. System nach Anspruch 1, wobei das Modul zur eindeutigen Identifizierung des Inhalts mindestens eines der folgenden Elemente umfasst:
- ein in den Behälter integriertes RFID-Etikett zur Identifizierung über Funkfrequenzen;
- einen Barcode oder zweidimensionalen Barcode;
- einen eindeutigen Identitätsnachweis, der in den Inhalt integriert ist;
- eine eindeutige Referenz auf eine Datenbank, die aus einer Kette geordneter Blöcke, der sogenannten Blockchain, besteht, die in den Inhalt integriert ist und von außen durch ein Wellensystem lesbar oder erkennbar ist.

5. System nach Anspruch 1, wobei die Anzeigevorrichtung so konfiguriert ist, dass sie ferner den oder die Inhalte eines Behälters anzeigt.

6. System nach Anspruch 1, wobei der Abstand zwischen der Öffnung des Behälters (24) und der Aufnahmevorrichtung (25) zwischen 20 und 1000 cm beträgt.

7. System nach Anspruch 1, wobei die Aufnahmevorrichtung (25) einen Blitz oder einen Wellensender umfasst, der bei einer Aufnahme ausgelöst wird.

8. System nach Anspruch 1, wobei es ein Datenkommunikationsmodul umfasst, das einen Datensender-Empfänger umfasst, der die Informationen des Verarbeitungsmoduls zugänglich macht.

9. System nach Anspruch 7, wobei das Datenverarbeitungsmodul so konfiguriert ist, dass es eine zeitliche Information mit der ersten Kennzeichnung verknüpft.

10. System nach Anspruch 8, wobei das Datenverarbeitungsmodul so konfiguriert ist, dass es eine zeitliche Information mit der ersten Kennzeichnung und einer zweiten Kennzeichnung verknüpft.

11. System nach Anspruch 1, wobei es eine Verschlussvorrichtung durch Anbringen einer ersten Kennzeichnung und einer zweiten Kennzeichnung umfasst, wobei die zweite Kennzeichnung ein mit dem ersten Etikett verbundenes Etikett ist.

12. System nach Anspruch 1, wobei das System eine integrierte Vorrichtung zur Rückverfolgbarkeit der inneren oder äußeren physikalischen Messungen umfasst, die in mindestens einem der folgenden Elemente positioniert ist: dem Behälter oder dem Inhalt.

13. System nach Anspruch 1, wobei das System eine integrierte Geolokalisierungsvorrichtung umfasst, die in mindestens einem der folgenden Elemente positioniert ist: dem Behälter oder dem Inhalt.

## Claims

1. System for capturing images of an open container moving on a conveyor, comprising:
- a conveyor (23);
- an open container (24) including at least one content;
- an image-capturing device (25) located above the open container (24);
**characterised in that** said system further comprises:
- a barcode reader (21) configured to read a barcode located on an outer face of said container (24);
- a display device configured to display at least one exposure of said image-capturing device (25) and the barcode of the container (24),
- a unique content identification module configured to identify each content;
- a data-processing module including a database, said data-processing module is configured:
- to store the exposures with the identification of the barcode of the container (24) and the unique identification of each content;
- to associate time information with exposure data from each exposure of the image-capturing device;
said processing module is configured to trigger an exposure when the open container (24) is proximal to the image-capturing device (25) during the movement of the conveyor (23) and it includes a closure device by applying a first labelling configured to be torn or altered when the container is opened.

2. System according to claim 1, wherein said system includes a unique identification module for the container included according to at least one of the following elements:
- a radiofrequency identification tag, of the RFID type, integrated into the container;
- a unique identity card integrated in the container;
- a unique reference to a database formed by an ordered blockchain, integrated in the container and legible or detectable from outside by a wave system.

3. System according to claim 1, wherein the unique content identification module includes a module configured to identify the shape or level in the container.

4. System according to claim 1, wherein the unique content identification module comprises at least one of the following elements:
- a radiofrequency identification tag, of the RFID type, integrated into the content;
- a barcode or two-dimensional barcode;
- a unique identity card integrated in the content;
- a unique reference to a database formed by an ordered blockchain, integrated in the content and legible or detectable from outside by a wave system.

5. System according to claim 1, wherein the display device is configured to further display the content(s) of a container.

6. System according to claim 1, wherein the distance between the opening of the container (24) and the image-capturing device (25) is between 20 and 1000 cm.

7. System according to claim 1, wherein the image-capturing device (25) includes a flash or a wave emitter which is triggered during an exposure.

8. System according to claim 1, wherein it includes a data-communication module which comprises a data transceiver making the information items from the processing module accessible.

9. System according to claim 7, wherein the data-processing module is configured to associate time information with the first labelling.

10. System according to claim 8, wherein the data-processing module is configured to associate time information with the first labelling and a second labelling.

11. System according to claim 1, wherein it includes a closure device by applying a first labelling and a second labelling, said second labelling being a label linked to the first label.

12. System according to claim 1, wherein the system includes an integrated device for traceability of the internal or external physical measurements positioned in at least one of the following elements: the container or the content.

13. System according to claim 1, wherein the system includes an integrated geolocation device positioned in at least one of the following elements: the container or the content.
